# EUROPEAN PATENT APPLICATION

(11) **EP 2 835 515 A1**
(43) Date of publication of application: **11.02.2015**
(21) Application number: 13771883.9
(22) Date of filing: 02.04.2013
(51) Int. Cl.: F02C 1/05, F01K 23/10, F01K 25/10, F01K 27/02, F02C 7/143, F03G 6/00

(54) **GAS TURBINE ENGINE SYSTEM THAT USES ORGANIC MEDIUM**

(30) Priority: 05.04.2012 JP 2012086210
(71) Applicant: Kawasaki Jukogyo Kabushiki Kaisha, Kobe-shi, Hyogo 650-8670 (JP)
(72) Inventor: TANIMURA, Kazuhiko, Akashi-shi Hyogo 673-8666 (JP); TANAKA, Ryozo, Akashi-shi Hyogo 673-8666 (JP); SUGIMOTO, Takao, Kobe-shi Hyogo 650-8670 (JP); MORISHITA, Hiroshi, Kobe-shi Hyogo 650-8670 (JP); KUSTERER, Karsten, 52070 Aachen (DE); BOHN, Dieter, 52070 Aachen (DE); BRAUN, Rene, 52070 Aachen (DE)
(74) Representative: Style, Kelda Camilla Karen
(86) International application number: PCT/JP2013/060040
(87) International publication number: WO 2013/151029

(57) **Abstract**

A gas turbine engine system is provided which achieves high efficiency while using sunlight as a heat source. In a gas turbine engine system including: a compressor configured to compress a first working medium; a heater configured to heat the compressed first working medium by an external heat source; a turbine configured to output power from the first working medium; and an intermediate cooler provided at the compressor and configured to cool the first working medium compressed by a low-pressure compression part of the compressor and supply the first working medium to a high-pressure compression part of the compressor, an organic Rankine cycle engine using, as a second working medium, an organic substance which is a cooling medium of the intermediate cooler is provided.

## Description

### CROSS REFERENCE TO THE RELATED APPLICATION

This application is based on and claims Convention priority to Japanese patent application No. 2012-086210, filed April 5, 2012, the entire disclosure of which is herein incorporated by reference as a part of this application.

### BACKGROUND OF THE INVENTION

### (Field of the Invention)

The present invention relates to a complex gas turbine engine system equipped with an organic Rankine cycle engine which uses organic substance as a working medium.

### (Description of Related Art)

In recent years, as a solution to the environment problems or the energy problems, a distributed energy supply system has been proposed in which relatively small power plants are installed near electric power consumers and supply electric power. As one power source which is part of the distributed energy supply system, use of a middle-sized or small-sized gas turbine engine has been suggested (e.g., Patent Document 1). For a distributed power source, it is particularly an important issue to improve the efficiency.

### [Prior Art Document]

### [Patent Document]

[Patent Document 1] JP Laid-open Patent Publication No. 2007-159225

### SUMMARY OF THE INVENTION

However, as a method for improving the efficiency of a middle-sized or small-sized gas turbine, increasing of a temperature or increasing of a pressure ratio is difficult due to restrictions in size. In addition, conventionally, a regenerative cycle in which exhaust heat from a gas turbine is used for preheating a working gas is established, or a cogeneration system using exhaust heat from a gas turbine as a heat source for a steam turbine is established, thereby comprehensively improving the efficiency of the entire system. However, it is very difficult to further increase the efficiency by developing an engine with a low pressure ratio suitable for a regenerative cycle or developing a low-output and high-efficient steam turbine for use in a cogeneration system.

Therefore, in order to solve the above-described problems, an object of the present invention is to provide a combined-type gas turbine engine system which achieves high efficiency by very effectively utilizing heat from a gas turbine engine.

In order to achieve the above-described object, a gas turbine engine system according to the present invention includes: a compressor configured to compress a first working medium; a heater configured to heat the compressed first working medium utilizing an external heat source; a turbine configured to output power from the first working medium; an intermediate cooler provided at the compressor and configured to cool the first working medium compressed by a low-pressure compression part of the compressor and supply the first working medium to a high-pressure compression part of the compressor; and an organic Rankine cycle engine using, as a second working medium, an organic substance which serves as a cooling medium of the intermediate cooler.

With this configuration, by using a low-boiling-point organic substance as the working medium of the Rankine cycle engine combined with a gas turbine engine, it is possible to effectively use the heat of the relatively-low-temperature working medium passing through the compressor, and thus it is possible to obtain very high efficiency for the entire engine system.

In one embodiment of the present invention, the gas turbine engine system may further include: a heat exchanger provided on a discharge path for discharging the first working medium discharged from the turbine, the heat exchanger using, as a heating medium, the first working medium discharged from the turbine; and an organic Rankine cycle engine using, as a third working medium, an organic substance which serves as a heat receiving medium of the heat exchanger. With this configuration, the organic media are used, and not only the heat of the working medium passing through the compressor but also the heat of the working medium discharged from the turbine are used to output power, and thus it is possible to obtain further high efficiency for the entire engine system.

In one embodiment of the present invention, as the heater, a solar heater configured to heat the first working medium utilizing sunlight as a heat source may be provided. With this configuration, it is possible to increase the efficiency of the engine system while suppressing a load on the environment by using sunlight which is natural energy.

Any combination of at least two constructions, disclosed in the appended claims and/or the specification and/or the accompanying drawings should be construed as included within the scope of the present invention. In particular, any combination of two or more of the appended claims should be equally construed as included within the scope of the present invention.

### BRIEF DESCRIPTION OF THE DRAWINGS

In any event, the present invention will become more clearly understood from the following description of embodiments thereof, when taken in conjunction with the accompanying drawings. However, the embodiments and the drawings are given only for the purpose of illustration and explanation, and are not to be taken as limiting the scope of the present invention in any way whatsoever, which scope is to be determined by the appended claims. In the accompanying drawings, like reference numerals are used to denote like parts throughout the several views, and:
Fig. 1 is a block diagram showing a schematic configuration of a gas turbine engine system according to an embodiment of the present invention; and
Fig. 2 is a block diagram showing a modification of the gas turbine engine system in Fig. 1.

### DESCRIPTION OF EMBODIMENTS

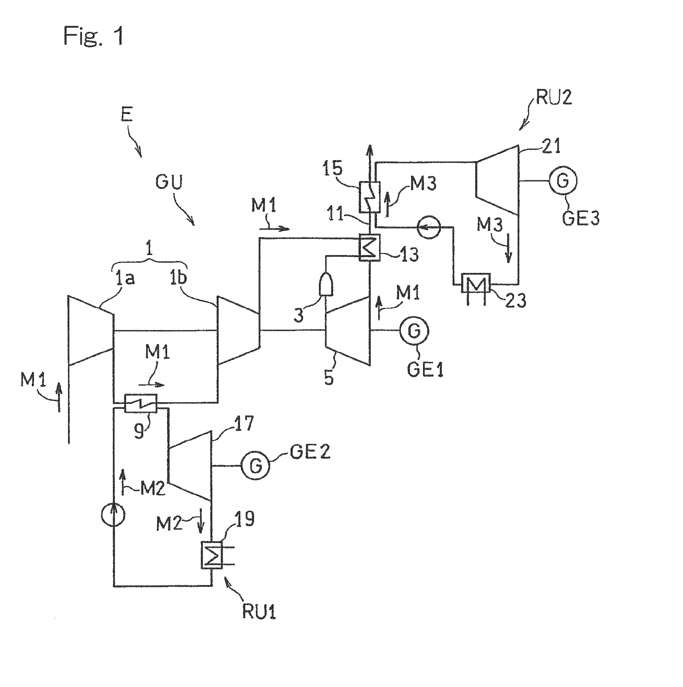

Hereinafter, embodiments of the present invention will be described with reference to the drawings. Fig. 1 is a schematic configuration diagram showing a gas turbine engine system (hereinafter, referred to simply as "engine system") E according to an embodiment of the present invention. The engine system E includes three engine units, namely, a gas turbine engine unit GU, a first Rankine cycle engine unit RU1, and a second Rankine cycle engine unit RU2, and those engine units GU, RU1, RU2 drive respective loads such as generators GE1, GE2, GE3.

The gas turbine engine unit GU includes a compressor 1 which compresses a first working medium M1, a combustor 3 which is a heater for heating the first working medium M1 compressed by the compressor 1, and a first turbine 5 which outputs power from the combusted first working medium M1. In the present embodiment, an air may be used as the first working medium M1.

The compressor 1 includes a low-pressure compression part 1a and a high-pressure compression part 1b, and is provided with an intermediate cooler 9 arranged between the low-pressure compression part 1a and the high-pressure compression part 1b. By cooling the first working medium M1, compressed by the low-pressure compression part 1a, with the intermediate cooler 9, compression work of the high-pressure compression part 1b is reduced, and the efficiency is improved. The high-pressure first working medium M1 discharged from the compressor 1 passes through a regenerative heat exchanger 13 and then is sent to the combustor 3. The regenerative heat exchanger 13 preheats the first working medium M1 flowing from the compressor 1 toward the combustor 3 by using the heat of the high-temperature first working medium M1 discharged from the first turbine 5.

A heat exchanger 15 is further provided on a downstream of the regenerative heat exchanger 13 on a discharge path 11 which discharges the first working medium M1 discharged from the first turbine 5 to the outside. The first working medium M1 discharged from the regenerative heat exchanger 13 passes through the heat exchanger 15 as a heating medium and then is discharged to the outside.

In the first Rankine cycle engine unit RU1, a second turbine 17 is driven by a second working medium M2 which has been heated into a gaseous state utilizing, as a heat source, the heat of the first working medium M1 passing through the intermediate cooler 9, and power is outputted through the second turbine 17. The second working medium M2 discharged from the second turbine 17 is condensed by a first condenser 19 and then is supplied to the intermediate cooler 9 and the second turbine 17 again.

The first Rankine cycle engine unit RU1 is configured as an organic Rankine cycle engine using an organic substance as the second working medium M2. In particular, the temperature of the first working medium M1 that is being compressed in the compressor 1 is about 100°C to 200°C, which is relatively low, thus an organic medium having a low boiling point may be used as the second working medium M2. In this example, a fluorocarbon-based organic medium, for example, HFC-134a, HFC-245fa, HFC-365mfc, or the like, may be used.

In the second Rankine cycle engine unit RU2, a third turbine 21 is driven by a third working medium M3 which has been heated utilizing, as a heat source, the heat of the first working medium M1 passing through the heat exchanger 15 as a heating medium as described above, and power is outputted through the third turbine 21. The third working medium M3 discharged from the third turbine 21 is condensed by a second condenser 23 and then is supplied to the heat exchanger 15 and the third turbine 21 again.

The second Rankine cycle engine unit RU2 is also configured as an organic Rankine cycle engine using an organic substance as the third working medium M3. The first working medium M1, which is an exhaust gas discharged from the first turbine 5, is kept at a relatively high temperature of about 200°C to 300°C even after passing through the regenerative heat exchanger 13, thus it is possible to use an organic medium having a higher boiling point than that of the second working medium M2. In this example, a petroleum-based organic medium, for example, butane or pentane, may be used.

The second Rankine cycle engine unit RU2 may be configured as an ordinary steam turbine using water as the third working medium M3. Alternatively, the second Rankine cycle engine unit RU2 may be omitted, but the organic media are used as in the present embodiment, not only the heat of the first working medium M1 passing through the compressor 1 but also the heat of the first working medium M1 discharged from the first turbine 5 are used to output power, and thus it is possible to obtain further high efficiency for the entire engine system E.

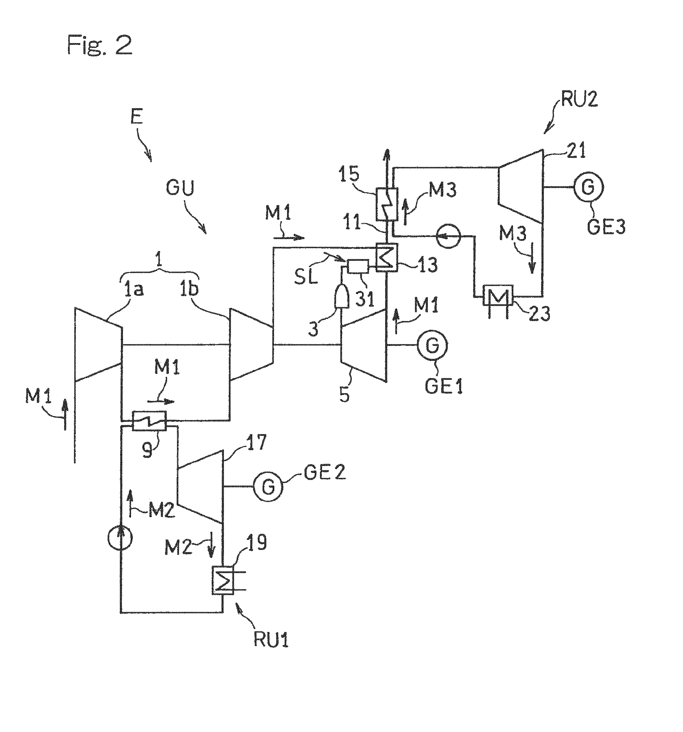

In addition, as a modification of the present embodiment, as shown in Fig. 2, a solar heater 31 which uses sunlight SL as a heat source may be additionally provided at the upstream side of the combustor 3 as a heater which heats the first working medium M1 compressed by the compressor 1. By providing such a configuration and heating the first working medium M1 again by using the sunlight SL which is natural energy, the efficiency of the engine system E is further improved.

As described above, in the engine system E according to the present embodiment, since the organic substance having a low boiling point is used as the working medium M2 of the Rankine cycle engine (in particular, the first Rankine cycle engine RU1) combined with the gas turbine engine unit GU, it is possible to effectively use the heat of the relatively-low-temperature working medium passing through the compressor 1, and thus it is possible to obtain very high efficiency for the entire engine system E.

Although the present invention has been described above in connection with the embodiments thereof with reference to the accompanying drawings, numerous additions, changes, or deletions can be made without departing from the gist of the present invention. Accordingly, such additions, changes, or deletions are to be construed as included in the scope of the present invention.

### [Reference Numerals]

- 1: Compressor
- 3: Combustor (heater)
- 5: First turbine
- 9: Intermediate cooler
- 13: Regenerative heat exchanger
- 15: Heat exchanger
- 31: Solar heater
- E: Gas turbine engine system
- GU: Gas turbine engine unit
- RU1: First Rankine cycle engine unit
- RU2: Second Rankine cycle engine unit
- M1: First working medium
- M2: Second working medium
- M3: Third working medium

## Claims

1. A gas turbine engine system comprising:
a compressor configured to compress a first working medium;
a heater configured to heat the compressed first working medium utilizing an external heat source;
a turbine configured to output power from the first working medium;
an intermediate cooler provided at the compressor and configured to cool the first working medium compressed by a low-pressure compression part of the compressor and supply the first working medium to a high-pressure compression part of the compressor; and
an organic Rankine cycle engine using, as a second working medium, an organic substance which serves as a cooling medium of the intermediate cooler.

2. The gas turbine engine system as claimed in claim 1, further comprising:
a heat exchanger provided on a discharge path for discharging the first working medium discharged from the turbine, the heat exchanger using, as a heating medium, the first working medium discharged from the turbine; and
an organic Rankine cycle engine using, as a third working medium, an organic substance which serves as a heat receiving medium of the heat exchanger.

3. The gas turbine engine system as claimed in claim 1 comprising, as the heater, a solar heater configured to heat the first working medium utilizing sunlight as a heat source.
